# EUROPEAN PATENT APPLICATION

(11) **EP 1 653 460 A1**
(43) Date of publication of application: **03.05.2006**
(21) Application number: 05256753.4
(22) Date of filing: 01.11.2005
(51) Int. Cl.: G11B 15/03, G11B 31/00, G11B 19/06

(54) **Combined recording apparatus with automatic selection of a recording apparatus and corresponding method**

(30) Priority: 02.11.2004 KR 2004088139
(71) Applicant: Samsung Electronics Co., Ltd., Suwon-si, Gyeonggi-Do (KR)
(72) Inventor: Kim, Jin-hwi, Gweonseon-gu Suwon-si Gyeonggi-do (KR)
(74) Representative: Waddington, Richard

(57) **Abstract**

A combination recording apparatus and method thereof automatically selects a recorder based on a use status. A combination recording apparatus in which a first recorder (100) and a second recorder (200) are integrated, has a first recording unit (110) provided to the first recorder (100) and recording an input image and/or audio; a second recording unit (210) provided to the second recorder (200) and recording the input image and/or audio; and a control unit (420) setting one of the first recording unit (110) and the second recording unit (210) to record the input image and/or audio based on a recording frequencies of the first recorder (100) and the second recorder (200). Since the use status such as the recording frequency reflects a preference and a use habit of a user, it is useful to automatically select a recorder based on a user's preference. It is also beneficial that the combination recording apparatus is easier to operate.

## Description

The present invention relates to a combination (combo) apparatus. More particularly, the present invention relates to a combination apparatus in which two or more independent apparatuses are integrated.

In a combination apparatus, two or more independent apparatuses performing each other's own functions are integrated. Examples of combination apparatus may include a mobile phone and digital camera combination apparatus, and a digital camera and digital camcorder combination apparatus, and sorts of combination apparatus have been recently very diverse.

Apparatuses integrated with the combination apparatus independently operate to perform each other's own functions. When the combination apparatus operates, all the unit apparatuses do not simultaneously operate, but one apparatus generally does at a time. For example, the digital camera and the digital camcorder in a combination apparatus cannot operate at the same time, but one operates while the other does not.

The operation features of the combination apparatus may directly apply to a combination recorder integrated with two or more recorders. Accordingly, when recording an image with the combination recorder, only one of the unit recorders of the combination recorder performs recording.

A user has to select one to use among the unit recorders integrated in the combination recorder and it inconveniences the user.

In view of a trend toward apparatuses with simple operation, an improvement is required.

Additional aspects and/or advantages of the invention will be set forth in part in the description which follows and, in part, will be apparent from the description, or may be learned by practice of the invention.

It is an object of the present invention to address the above problem and to provide the advantages described below. Therefore, an object of the present invention is to provide a combination recording apparatus of easy manipulation which automatically selects a recorder to use based on a use status and a method thereof.

According to an aspect of the present invention, there is provided a combination recording apparatus in which a first recorder and a second recorder are integrated, including: a first recording unit provided to the first recorder for recording an input image and/or audio, a second recording unit provided to the second recorder for recording the input image and/or audio, and a control unit for setting one of the first recording unit and the second recording unit to record the input image and/or audio based on a recording frequencies of the first recorder and the second recorder.

The control unit may be operable to set the first recording unit or the second recording unit of a recorder with a higher recording frequency to record the input image and/or audio.

The control unit may be operable to set the first recording unit or the second recording unit of a recently recorded recorder to record the input image and/or audio if the first recorder and the second recorder have the same frequency recording.

If a reservation-recording request is received, the control unit may be operable to set an initial reservation-recording set-up such that the first recording unit or the second recording unit of a recorder with a higher recording frequency records the input image and/or audio.

The combination recording apparatus may further include an OSD (On Screen Display) unit for OSD-processing a certain information, and if a recording request is received, the control unit may be operable to control the OSD unit to OSD-process an information regarding the first recording unit or the second recording unit of a recorder with a higher recording frequency records the input image and/or audio.

The combination apparatus further including: a third recording unit provided to a third recorder for recording the input image and/or audio; and a control unit for setting one of the first recording unit, the second recording unit and the third recording unit to record the input image and/or audio based on a recording frequencies of the first recorder, the second recorder and the third recorder.

The apparatus may be adapted such that each recording frequency of the first recorder and the second recorder may be incrementally counted as the first recording unit and the second recording unit is set to record the input image and/or audio. The control unit may be provided to one of the first recorder and the second recorder.

The first recorder may be one of an optical recording medium recorder, a magnetic recording medium recorder, a semiconductor recording medium recorder, a CDR (Compact Disk Recorder), a DVDR (Digital Video Disk Recorder), a HDD (Hard Disk Drive) recorder, a VCR (Video Cassette Recorder), and a memory card recorder, and the second recorder may be one of the optical recording medium recorder, the magnetic recording medium recorder, the semiconductor recording medium recorder, the CDR, the DVDR, the HDD recorder, the VCR, and the memory card recorder.

According to an aspect of the present invention, there is provided a method for automatically selecting a recorder of a combination recording apparatus in which a first recorder and a second recorder are integrated, including: a) comparing pre-stored recording frequencies of the first recorder and the second recorder, and b) setting one of the first recorder and the second recorder to record the input image and/or audio based on the comparison result.

The setting operation may set the first recorder or the second recorder of a higher recording frequency to record the input image and/or audio.

The setting operation may set the first recorder or the second recorder of a recently recorded recorder to record the input image and/or audio if the first recorder and the second recorder have the same frequency of recording.

If a reservation-recording request is received, the setting operation may set an initial reservation-recording set-up such that the first recorder or the second recorder of a higher recording frequency records the input image and/or audio.

The method may further include, if a recording request is received, OSD (On Screen Display)-processing information regarding the first recorder or the second recorder of a higher recording frequency records the input image and/or audio.

Each recording frequency of the first recorder and the second recorder may be incrementally counted as the first recorder and the second recorder, respectively, are set to record the input image and/or audio.

For a better understanding of the invention, and to show how embodiments of the same may be carried into effect, reference will now be made, by way of example, to the accompanying diagrammatic drawings in which:
FIG. 1 is a block diagram of a DVDR and VCR combination apparatus which automatically selects a recorder to use according to the apparatus use status according to an embodiment of the present invention;
FIG. 2 is a flowchart of an example of a method of automatically selecting a recorder to use in the DVDR and VCR combination apparatus;
FIGS. 3A and 3B are views of examples of menu screen provided by automatic recorder selection; and
FIG. 4 is a block diagram of a DVDR and VCR combination apparatus which automatically selects a recorder to use according to the apparatus use status according to another embodiment of the present invention.

Exemplary embodiments of the present invention will be described in detail with reference to the annexed drawings. In the drawings, the same elements are denoted by the same reference numerals throughout the drawings. In the following description, detailed descriptions of known functions and configurations incorporated herein have been omitted for conciseness and clarity.

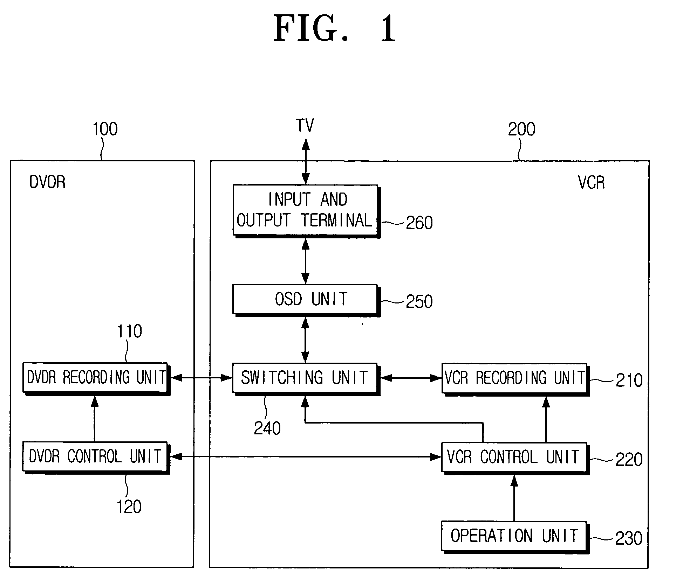

FIG. 1 is a block diagram of a DVDR and VCR combination apparatus according to an embodiment of the present invention, which automatically selects a recorder to use according to the apparatus use status. The DVDR and VCR combination apparatus has a DVDR (Digital Video Disk Recorder) 100 and a VCR (Video Cassette Recorder) 200 integrated therein.

The DVDR 100 is a recorder storing an input image and/or audio onto a DVD. The DVDR 100 includes a DVDR recording unit 110, and a DVDR control unit 120.

The DVDR recording unit 110 records on the inserted DVD the input image and/or audio transmitted from a switching unit 240 which will be explained below.

The DVDR control unit 120 controls the DVDR recording unit 110. The DVDR control unit 120 can data-communicate with the VCR control unit 220 which will be explained below, and receive a control request from the VCR control unit 220.

The VCR 200 operates to record an input image and/or audio on a tape. The VCR 200 includes a VCR recording unit 210, a VCR control unit 220, a manipulation unit 230, a switching unit 240, an OSD (On Screen Display) unit 250, and an input and output terminal 260.

The VCR recording unit 210 records on the inserted tape the input image and/or audio transmitted from the switching unit 240.

The VCR control unit 220 controls the VCR recording unit 210. The VCR control unit 220 can data-communicate with the DVDR control unit 120, and transmit the control request to the DVDR control unit 120.

The manipulation unit 230 is a user interface to receive a user's input manipulation request and to transmit the request to the VCR control unit 220. The manipulation unit 230 includes a manipulation panel on a front of the DVDR and VCR combination apparatus, and a remote controller (not shown).

The switching unit 240 switches so as to transmit the input image and/or audio from a TV, as an external device, to one of the DVDR recording unit 110 and the VCR recording unit 210. The switching unit 240 is controlled by the VCR control unit 220.

The OSD unit 250 generates an interface screen such as a text information and a menu screen to display on TV. The input and output terminals 260 are connected with the external device such as a TV.

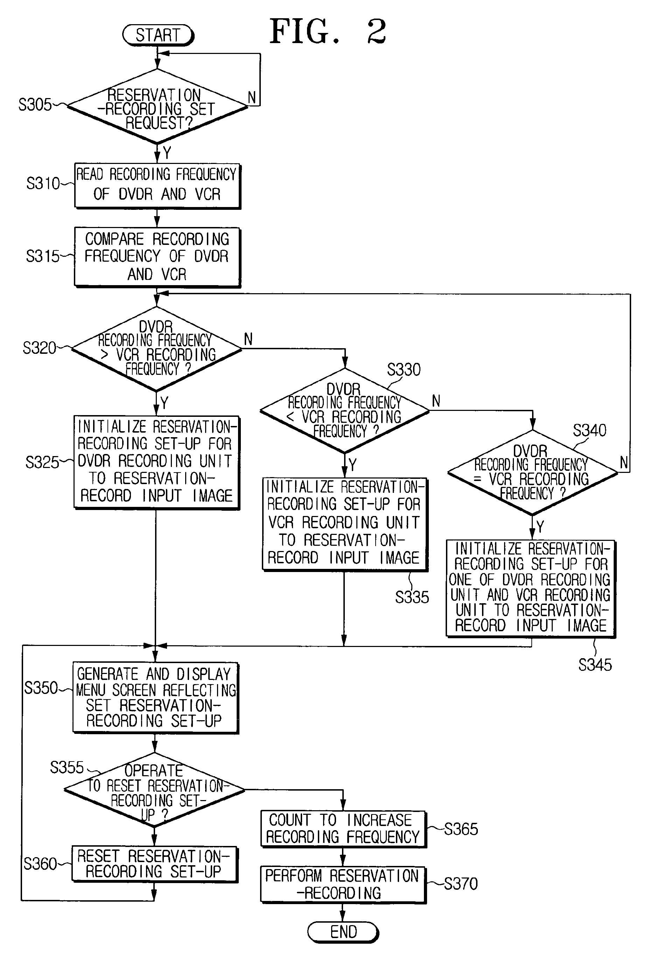

The method of the DVDR and VCR combination apparatus shown in FIG. 1 to automatically select a recorder based on the apparatus use status will be explained in detail hereinafter with reference to FIG. 2. FIG. 2 is a flowchart of an example of the method of the DVDR and VCR combination (combo) apparatus for automatically selecting a recorder.

Firstly, when 'reservation-recording setting request' is transmitted (S305), the VCR control unit 220 reads out 'frequency of past DVDR recording' and 'frequency of past VCR recording' as the information on an apparatus use status (S310).

The 'reservation-recording setting request' may be input by a user pressing on a reservation-recording button of the manipulation unit 230, and the VCR control unit 220 receives the input 'reservation-recording setting request' via the manipulation unit 230.

The 'frequency of DVDR recording' means the number of past recording with the DVDR 100 up to current time (that is, until 'reservation-recording setting request' is received). Also, the 'frequency of VCR recording' means the number of past recording with the VCR 200 up to current time. The 'frequency of DVDR recording' and the 'frequency of VCR recording' are stored at a memory (not shown) provided inside or outside of the VCR control unit 220, and the VCR control unit 220 reads out the information from the memory.

The VCR control unit 220 compares the 'frequency of DVDR recording' and the 'frequency of VCR recording' read out in S310 (S315).

If it is determined that the 'frequency of DVDR recording' is greater than the 'frequency of VCR recording' in S315 (S320), the VCR control unit 220 initializes the reservation-recording set-up such that the DVDR recording unit 110 takes up the reservation-recording job (S325).

On the contrary, if it is determined that the 'frequency of VCR recording' is greater than the 'frequency of DVDR recording' in S315 (S330), the VCR control unit 220 initializes the reservation-recording set-up such that the VCR recording unit 210 takes up the reservation-recording job (S335).

If it is determined that the 'frequency of DVDR recording' and the 'frequency of VCR recording' are the same in S315 (5340), the VCR control unit 220 initializes the reservation-recording set-up such that the DVDR recording unit 110 or the VCR recording unit 210 may take up the reservation-recording job (5345).

Specifically, in S345, the reservation-recording set-ups are initialized by selecting one of the DVD recording unit 110 and the VCR recording unit 210 i) that is set as a default recorder, or ii) that has been lastly used for recording.

The VCR control unit 220 generates and displays the menu screen reflecting the reservation-recording set-up initialized according to one of S325, S335, and S345 (S350). To this end, the VCR control unit 220 controls the OSD unit 250 to generate and OSD-process the menu screen reflecting the initialized reservation-recording set-ups. The OSD-processed menu screen is displayed on the TV for the observation of a user.

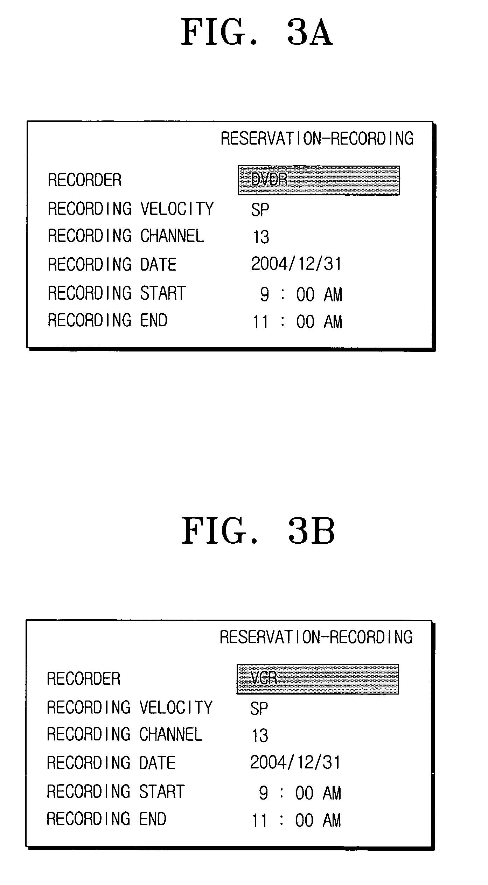

FIGS. 3A and 3B show examples of the menu screen generated and displayed in the operation S350. FIG. 3A is a view of an example of the menu screen generated and displayed when the DVDR recording unit 110 is set for the reservation-recording set-up. Referring to FIG. 3A, the 'DVDR' is displayed as 'recorder' on the reservation recording set-up of the menu screen. FIG. 3B is a view of an example of the menu screen generated and displayed when the VCR recording unit 210 is set for the reservation recording. Referring to FIG. 3B, the 'VCR' is displayed as 'recorder' on the reservation recording set-up of the menu screen.

A user may change the reservation recording set-up using the menu screen as generated and displayed in operation S350. For example, a user may change the recorder on the reservation-recording set-up of the menu screen i) from the `DVDR' to the 'VCR', or ii) from the 'VCR' to the 'DVDR'.

If the reset of the reservation recording set-up is operated by a user as described above (S355), the VCR control unit 220 accordingly resets the reservation recording set-up (S360), and generates and shows the menu screen reflecting the reset reservation recording set-up (5350) .

If a user does not reset the reservation recording set-up, or completes the reset (S355), the VCR control unit 220 incrementally counts the frequency of recording, reflecting the finally set reservation recording set-up (S365). In specific, if the 'DVDR' is finally set in the reservation recording set-up, the 'frequency of DVDR recording' is counted to increase by '1', and if the 'VCR' is finally set, the 'frequency of VCR recording' is counted to increase by '1'.

The reservation recording is performed according to the finally set reservation recording set-up (S370).

In the present embodiment, the method has been explained for automatically selecting a recorder for reservation-recording based on the use status, that is, the frequency of DVDR and VCR recording, of the DVDR and VCR combination apparatus during "initial process of the reservation-recording set up".

However, this should not be considered as limiting. The present invention can be applied to "the initial process of general recording set-up". Also, the present invention can be applied to "an easy recording" in which a recorder having a higher frequency of past recording records the input image and/or audio without requiring a user's selection of the recorder.

In case of the general recording set-up and the easy recording, the guide information may be generated and displayed on the TV screen to show that the recorder with higher frequency of past recording records the input image and/or audio. In specific, the VCR control unit 220 may control the OSD unit 250 to generate and display on the TV screen the guide information, such as "DVDR recording" when the 'frequency of DVDR recording' is greater than the 'frequency of VCR recording', or "VCR recording" when the 'frequency of VCR recording' is greater than the 'frequency of DVDR recording'.

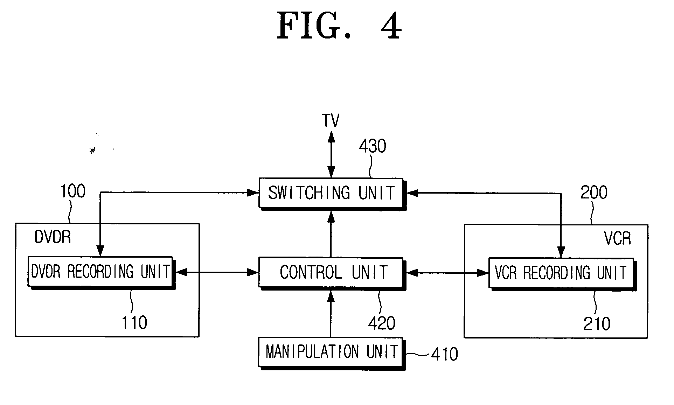

Hereinafter, the DVDR and VCR combination apparatus will be explained with reference to FIG. 4, which automatically selects a recorder based on the use status of apparatus in accordance with another embodiment of the present invention.

Unlike the DVDR and VCR combination apparatus depicted in FIG. 1, the DVDR and VCR combination apparatus of FIG. 4 shares one common control unit 420. The control unit 420 controls respective operations of the DVDR recording unit 110, the VCR recording unit 210, and the switching unit 430. In other words, the control unit 420 of FIG. 4 operates both as the DVDR control unit 120 and the VCR control unit 220 of FIG. 1.

The other blocks 110, 210, 410 and 430 function almost the same as blocks of FIG. 1, and therefore, the detailed description thereof will be omitted. The manipulation unit 410, the control unit 420, and the switching unit 430 may be provided in the DVDR 100 or the VCR 200.

The embodiments of the present invention have been in detail explained with an example that the combination recording apparatus, in which the 'DVDR' and the 'VCR' are integrated, automatically selects a recorder. However, there is no limit to sorts of recorders integrated in the combination recording apparatus for the present invention. For example, the combination recording apparatus may be implemented by selectively integrating among an optical recording medium recorder, a magnetic recording medium recorder, and a semiconductor recording medium recorder.

Examples of the optical recording medium recorder include a CDR (Compact Disk Recorder) and DVDR, examples of the magnetic recording medium recorder include a HDD (Hard Disk Drive) recorder, and a VCR, and examples of the semiconductor recording medium recorder include a memory card recorder.

Recorders integrated in the combination recording apparatus may be of the same sorts. In other words, the present invention may be applied to when the combination recording apparatus is implemented with two DVDRs.

There is no limit to the number of recorders integrated in the combination recording apparatus. In specific, the present invention may be applied to when three or more recorders are integrated into one combination recording apparatus. For example, the present invention may be applied to when the DVDR, the VCR, the HDD recorder are integrated.

There is also no limit to the external device providing the combination recording apparatus with the input image and/or audio, and the device needs only to output an image. Examples of the external device include a TV, a set-top box, a digital camcorder, and a digital camera.

If the embodiments of the present invention are applied as described above, it is possible to automatically select a recorder based on the apparatus use status such as a frequency of recording. Since the apparatus use status reflects the preference or the use habit of user, it is useful to automatically select a recorder in view of user's preference, and easier operation of the combination recording apparatus is provided.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A combination recording apparatus in which a first recorder (100) and a second recorder (200) are integrated, comprising:
a first recording unit (110) provided to the first recorder (100) for recording an input image and/or audio;
a second recording unit (210) provided to the second recorder (200) for recording the input image and/or audio; and
a control unit (420) for setting one of the first recording unit (110) and the second recording unit (210) to record the input image and/or audio based on a recording frequencies of the first recorder (100) and the second recorder (200).

2. The combination recording apparatus as claimed in claim 1, wherein the control unit (420) is operable to set the first recording unit (110) or the second recording unit (210) of a recorder with a higher recording frequency to record the input image and/or audio.

3. The combination recording apparatus as claimed in claim 2, wherein the control unit (420) is operable to set the first recording unit (110) or the second recording unit (210) of a recently recorded recorder to record the input image and/or audio if the first recorder (100) and the second recorder (200) have the same frequency recording.

4. The combination recording apparatus as claimed in claim 2 or claim 3, wherein if a reservation-recording request is received, the control unit (420) is operable to set an initial reservation-recording set-up such that the first recording unit (110) or the second recording unit (210) of a recorder with a higher recording frequency records the input image and/or audio.

5. The combination recording apparatus as claimed in claim 2, 3 or 4, further comprising an OSD (On Screen Display) unit (250) for OSD-processing information;
wherein if a recording request is received, the control unit (420) is operable to control the OSD unit (250) to OSD-process information regarding the first recording unit (110) or the second recording unit (210) of a recorder with a higher recording frequency records the input image and/or audio.

6. The combination recording apparatus as claimed in any preceding claim, adapted such that each recording frequency of the first recorder (100) and the second recorder (200) is incrementally counted as the first recording unit (110) and the second recording unit (210) are set to record the input image.

7. The combination recording apparatus as claimed in any preceding claim, wherein the control unit (420) is provided to one of the first recorder (100) and the second recorder (200).

8. The combination apparatus as claimed in any preceding claim, wherein the first recorder (100) is one of an optical recording medium recorder, a magnetic recording medium recorder, a semiconductor recording medium recorder, a CDR (Compact Disk Recorder), a DVDR (Digital Video Disk Recorder), a HDD (Hard Disk Drive) recorder, a VCR (Video Cassette Recorder), and a memory card recorder,
and the second recorder (200) is one of the optical recording medium recorder, the magnetic recording medium recorder, the semiconductor recording medium recorder, the CDR, the DVDR, the HDD recorder, the VCR, and the memory card recorder.

9. The combination apparatus as claimed in any preceding claim, the combination apparatus further comprising:
a third recording unit provided to a third recorder for recording the input image and/or audio; and
a control unit (420) for setting one of the first recording unit (110), the second recording unit (210) and the third recording unit to record the input image and/or audio based on recording frequencies of the first recorder (100), the second recorder (200) and the third recorder.

10. The combination apparatus as claimed in any preceding claim, the combination apparatus further comprising a memory to store recording frequencies of the first and second recorders (200).

11. The combination apparatus as claimed in any preceding claim, the combination apparatus further comprising the control unit (420) being operable to send the recording frequencies to a display unit.

12. A method for automatically selecting a recorder of a combination recording apparatus in which a first recorder (100) and a second recorder (200) are integrated, comprising:
comparing pre-stored recording frequencies of the first recorder (100) and the second recorder (200); and
setting the first recorder (100) or the second recorder (200) to record the input image and/or audio based on the comparison result.

13. The method as claimed in claim 12, wherein the setting operation sets the first recorder (100) or the second recorder (200) of a higher recording frequency to record the input image and/or audio.

14. The method as claimed in claim 13, wherein the setting operation sets the first recorder (100) or the second recorder (200) of a recently recorded recorder to record the input image and/or audio if the first recorder (100) and the second recorder (200) have the same frequency of recording.

15. The method as claimed in claim 13 or claim 14, wherein if a reservation-recording request is received, the setting operation sets an initial reservation-recording set-up such that the first recorder (100) or the second recorder (200) of a higher recording frequency records the input image and/or audio.

16. The method as claimed in any one of claims 13 to 15, further comprising:
if a recording request is received, OSD (On Screen Display)-processing an information regarding the first recorder (100) or the second recorder (200) of a higher recording frequency records the input image and/or audio.

17. The method as claimed in claim 12, wherein each recording frequency of the first recorder (100) and the second recorder (200) is incrementally counted as the first recorder (100) and the second recorder (200), respectively, are set to record the input image and/or audio.

18. The method as claimed in any one of claims 12 to 17, wherein the first recorder (100) is one of an optical recording medium recorder, a magnetic recording medium recorder, a semiconductor recording medium recorder, a CDR (Compact Disk Recorder), a DVDR (Digital Video Disk Recorder), a HDD (Hard Disk Drive) recorder, a VCR (Video Cassette Recorder), and a memory card recorder; and the second recorder (200) is one of the optical recording medium recorder, the magnetic recording medium recorder, the semiconductor recording medium recorder, the CDR, the DVDR, the HDD recorder, the VCR, and the memory card recorder.
